# EUROPEAN PATENT APPLICATION

(11) **EP 2 434 466 A1**
(43) Date of publication of application: **28.03.2012**
(21) Application number: 10777781.5
(22) Date of filing: 19.05.2010
(51) Int. Cl.: G08G 1/00, G01C 21/00

(54) **DRIVING ASSISTANCE METHOD AND DEVICE**

(30) Priority: 20.05.2009 JP 2009121760
(71) Applicant: Optex Co., Ltd., Ohtsu-shi Shiga-ken 520-0801 (JP)
(72) Inventor: ICHIEN, Kenji, Otsu-shi Shiga 520-0101 (JP); MIZUTA, Takahiro, Otsu-shi Shiga 520-0101 (JP); UKAI, Toru, Otsu-shi Shiga 520-0101 (JP); GOTOH, Terukazu, Otsu-shi Shiga 520-0101 (JP); KAGEYAMA, Naoki, Otsu-shi Shiga 520-0101 (JP); OKABE, Junichiro, Otsu-shi Shiga 520-0101 (JP)
(74) Representative: Vossius & Partner
(86) International application number: PCT/JP2010/058461
(87) International publication number: WO 2010/134548

(57) **Abstract**

The present invention measures the frequency of occurrence of behaviors of a particular behavior for each time within a predetermined driving unit for each type of driving behaviors and causes the measured frequency of occurrence on a display unit as a driving evaluation index aimed at attaining a zero number each time the particular behavior takes place. Also, for each type of the driving behaviors, based on the frequency of occurrence of the particular behavior, which is a proportion of the number of occurrence of the particular behavior for each type relative to a predetermined driving time, which is the predetermined driving unit, the mean time between incidents of the particular behavior is calculated and the calculated mean time between the incidents is used as the driving evaluation index.

## Description

### CROSS REFERENCE TO THE RELATED APPLICATION

This application is based on and claims Convention priority to Japanese patent application No. 2009-121760, filed May 20, 2009, the entire disclosure of which is herein incorporated by reference as a part of this application.

### BACKGROUND OF THE INVENTION

### (Field of the Invention)

The present invention relates to a driving assistance method and a device therefor, in which the driving behavior is evaluated on the basis of a particular driving evaluation index acquired from the driving behavior of an automotive vehicle for the purpose of assisting an economical (eco) driving and/or a safe driving of a vehicle driver.

### (Description of Related Art)

The operation management device has hitherto been known in which a digital tachograph or a drive recorder mounted on an automotive vehicle is used for storing a record on automobile accidents or to analyze and supervise the operation.

In the meantime, in a taxi company where business vehicles are used, appointment of one or more safety driving supervisors and a specific managing standards such as, for example, a routine a periodic commitments of a proper diagnosis are required and, in recent years, even general business enterprises having corporate owned automotive vehicles in a number exceeding a predetermined number is required to appoint a safe driving supervisor and to conduct a regular guidance on the safe driving and, thus, the necessity of supervising the safe driving is increasing.

As one example of the conventional driving management device, the driving supervising device has been known, in which data on driving behaviors of a vehicle driver, who has driven an automotive vehicle, is acquired through a drive recorder and, based on such data, the driving propensity or the like is analyzed. See, for example, the patent documents 1 and 2 listed below.

In general, however, in the driving supervising device, one or a combination of an acceleration sensor for detecting the acceleration of an automotive vehicle, a GPS sensor for detecting the position of an automotive vehicle, and an imaging device for imaging the status of an automotive vehicle being driven are mounted on the automotive vehicle and, hence, detection data on the driving behavior can be acquired. Thereafter, using a personal computer (PC) or the like, a supervisor analyzes a driving behavior objectively on the basis of, for example, acceleration data descriptive of an abrupt behavior, which is called Hyari or Hatto, having been detected, and/or recorded image data descriptive of the events occurring before and after the abrupt behavior. Also, from the result of analysis, a driving evaluation is carried out according to an evaluation method such as, for example, a driving evaluation table (radar chart) display or a 100 point rating display.

### [Prior Art Literature]

[Patent Document 1] Japanese Patent No. 3044025
[Patent Document 2] Japanese Patent No. 3229297

### DISCLOSURE OF THE INVENTION

However, with the conventional evaluation method such as the driving evaluation table and the 100 point rating method, a high scorer, who has reviewed the evaluation, will be merely satisfied himself or herself at the evaluation whereas a low scorer, when the point given to him or her is low, will merely receive a warning or any other guidance; they cannot be regarded as expressive of the degree of risk on qualitative driving and the driving capability and, therefore, they cannot be regarded as readily understandable and having a versatility as a driving index. Also, since with the conventional evaluation method the evaluation is made after the event, there has been recognized a problem that with passage of time, a driver's impression tends to fade out to such an extent as to fail to get it through his or her head. On the other hand, even if arrangement is made to issue a warning each time a risky behavior is taken place, the vehicle driver becomes attentive only at that time and it does not lead to increase of the awareness of and motivate the safe driving and, hence, lacks the consistency.

Also, with the conventional device, since it is necessary that the detection data acquired from each of automotive vehicles on a number of the automotive vehicles for driving management are processed with the use of a personal computer or the like after the event so that based on it the evaluation on each driving can be made, a substantial amount of burden tends to be imposed on the supervisor and, also, not only does costs tend to be incurred because of the necessity of use of various sensors, including the acceleration sensor, and an imaging camera within the device, but works for installation of them are also required, and, therefore, a handy device has long been desired for as a device for mainly assisting the vehicle driver.

The present invention is devised to eliminate the problems and inconveniences in the prior art driving assistance device and is intended to provide a driving assistance method and a device thereof, in which a particular driving evaluation index, that is readily understandable and has a high versatility and a consistency, is used to reduce a burden on supervision at a low cost to thereby assist a vehicle driver simply.

The inventors of the present invention have completed the present invention which is effective to relieve the burden on supervision and also to assist the vehicle driver at the low cost, because the use of the driving evaluation index of a kind, which is readily understandable and has a high versatility and a consistency, on the basis of the finding that in driving behaviors of the vehicle driver, reduction of particular behaviors violating the safe driving, non-eco behavior violating an economical driving and suspected careless and suspected hasty behaviors as risky behaviors is effective for the safe driving and the economical driving, is effective to allow the vehicle driver to improve his or her way of driving.

In order to accomplish the object of the present invention described hereinabove, the driving assistance method according to one aspect of the present invention is a driving assistance method for assisting a vehicle driver by securing a driving behavior from an acceleration of an automotive vehicle, which has been detected by an acceleration sensor mounted on the automotive vehicle, and evaluating such driving based on the driving behavior, in which for each type of driving behaviors, the frequency of occurrence of incidents of a particular behavior for each type is calculated and a driving evaluation index based on the measured frequency of occurrence of the incidents is displayed.

In the practice of the present invention, for each type of the driving behaviors, the frequency of occurrence of the incidents of the particular behavior in predetermined driving units may be measured, in which case the measured frequency of occurrence of the incidents is displayed for each particular behavior as the driving evaluation index aimed at a zero number. The term "predetermined driving unit" is intended to means that a predetermined driving time or distance is taken as one unit such as, for example, one day's traveling time.

According to the above described construction, since the number of occurrence of the particular behaviors measured within the predetermined traveling unit is displayed as the driving evaluation index, aimed at attaining the zero number, for each of those particular behaviors, the number of occurrence of, for example, the hasty behaviors can be ascertained during the driving within the one day's driving time and, therefore, the vehicle driver can tackle to realize the safe driving under the convincing awareness of the daily target to attain the zero number of occurrence which is readily understandable and has a high versatility. Also, since the vehicle driver himself or herself can ascertain the current number of occurrence, with no supervisor intervening, thanks to the instant display and the target setup of the number of occurrence, the burden on the supervisor can be relieved and the safe driving by the vehicle driver can be effectively assisted.

A driving assistance device according to another aspect of the present invention is a drive assistance device which includes an acceleration sensor for detecting the acceleration of an automotive vehicle for securing a driving behavior, a display unit, an electric power unit and a control unit, all mounted on the automotive vehicle for assisting a vehicle driver by evaluating a driving based on the driving behavior, in which the control unit includes a driving behavior occurrence number counting unit for counting, for each type of driving behaviors, the number of occurrence of driving behaviors of a particular behavior for each type and in which a driving evaluation index based on the counted number of occurrence of the driving behaviors is displayed by the display unit.

In the practice of the present invention, the driving behavior occurrence number counting unit may count, for each of the driving behaviors, the number of occurrence of driving behaviors of a particular behavior for each type, in which case the counted number of occurrence of the driving behaviors is displayed by the display unit for each occurrence of the particular behavior as a driving evaluation index aimed at the zero number of occurrence.

According to the above described construction, in addition to functional effects brought about by the previously described driving assistance method, since the particular behavior of the driving behaviors and detection data on the driving hour or the driving distance can be acquired from the accelerator sensor as a detecting sensor, a low cost is achieved and, since the electric power unit is included within the driving assistance device, not only is no electric cable wiring required to supply the electric power from the automotive vehicle to the driving assistance device, but the driving assistance device can be easily installed at any desired or required location in the automotive vehicle.

In one preferred embodiment of the present invention, for each occurrence of the particular behavior, annunciation may be made to cause the vehicle driver to recognize such occurrence. Accordingly, when the particular behavior such as, for example, the hasty behavior undesirable for the safe driving is committed, annunciation such as, for example, a voiced warning is immediately made and, therefore, the vehicle driver can be forced to recognize to what extent the driving maneuver is undesirable.

In another preferred embodiment of the present invention, for each type of driving behaviors, a mean time between incidents of the particular behavior (MTBI) or a mean distance between incidents of the particular behavior (MDBI) may be calculated on the basis of the frequency of occurrence of the particular behavior, which is a proportion of the number of occurrence of the each type of the particular behavior relative to a predetermined driving hour or a predetermined driving distance, which is a predetermined driving unit, in which case such mean time between the incidents or the mean distance between the incidents is displayed as a driving evaluation index.

By way of example, comparing the driving in which an abrupt braking occurs one time every three hours on an average (MTBI: 3 hours) and the driving in which the abrupt braking occurs one time every ten hours (MTBI: 10 hours) with each other, the latter driving is determined as having a higher safety factor than that in the former driving. In the event that no abrupt braking occur for a prolonged length of time, the MTBI gradually approaches a cumulative driving time and this MTBI becomes a driving evaluation index, having a consistency in safe driving, as a continuous time during which the safe driving can be expected. As an ideal goal for the safe driving, the MTBI is equal to the cumulative driving time.

Accordingly, unlike the conventional evaluation method, the mean time between the incidents or the mean distance between the incidents provides an index capable of increasing the continuous time (distance) with safe driving in the future by reducing the frequency of occurrence of the particular behavior, and, therefore, thanks to a display of the readily understandable, highly versatile and consistent index, it is possible to achieve a reasonably effective driving evaluation and, also, to assist the vehicle driver by causing the vehicle driver to have an enhanced awareness of and motivation to the safe driving.

In a further preferred embodiment of the present invention, whether or not an eco driving is conducted, may be evaluated from an acceleration waveform descriptive of the driving behaviors by classifying the driving behaviors into a plurality of behavior levels including a non-eco behavior level which are at least a risky behavior level and a quasi-risky behavior level of a lower degree of risk than that of the risky behavior level on the basis of an acceleration waveform descriptive of the driving behaviors and then displaying. Accordingly, since driving behaviors of a level other than the non-eco behavior level of the quasi-risky behaviors not reaching the risky behavior level in the mean time between the incidents or the mean distance between the incidents are displayed as a non-eco driving, a margin for improvement in mileage can be easily grasped and, therefore, the economical (eco) driving of the vehicle driver can be assisted.

In a still further preferred embodiment of the present invention, the number of continuous executions of a gentle (light) start may be evaluated and displayed as a driving evaluation index for an eco-driving during the start and acceleration of the vehicle driving. In such case, since a result of efforts to improve the mileage is displayed by the driving evaluation index, in which this is employed for an eco-point, a further economical (eco) driving by the vehicle driver can be assisted.

In a still further preferred embodiment of the present invention, a most recent short term driving evaluation index, which is a mean time between incidents or a mean distance between incidents for the predetermined driving unit, may be compared with a most recent long term driving evaluation index, which is a mean time between incidents or a mean distance between incidents for a longer driving unit than the predetermined driving unit, to evaluate a most recent short term driving propensity, and may then be displayed. Accordingly, it is possible to grasp whether the current short term driving propensity of the vehicle driver is desirable or undesirable as compared with the long term driving propensity, which is representative of the driving propensity peculiar to the vehicle driver, and, therefore, it can be used for motivation to improve and a further effective driving assistance can be performed.

In a still further preferred embodiment of the present invention, the particular behavior may be a risky behavior of a high degree of risk, in which case determination is made after the risky behavior has been classified into behaviors including at least an abrupt behavior, a suspected careless behavior, a suspected hasty behavior and a dozing behavior. Accordingly, with respect to the risky behavior, in addition to the abrupt behaviors, including the abrupt accelerator pedaling, the abrupt brake pedaling and the abrupt handle steering, and the dozing behavior, all having hitherto been know, a careless maneuver and an hasty maneuver, which constitute major causes of automobile accidents, are displayed and, by means of the voiced annunciation referred to previously, a prevention of an automobile accident is stimulated to thereby achieve an effective driving assistance.

In a still further preferred embodiment of the present invention, a voiced message requesting the vehicle drive to speak may be issued at the time of occurrence of each of the behaviors in the event that determination is made of the suspected careless behavior, the suspected hasty behavior and the dozing behavior, in which case, if no response is made, annunciation is made with the voiced message and an alarm. In this case, by causing the request made by the voiced message to exhibit an awaking function, a further effective driving assistance can be conducted.

In a still further preferred embodiment of the present invention, for each type of the driving behaviors the rate of a particular maneuver may be calculated on the basis of the frequency of maneuvers, which is a proportion of the number of occurrences of the particular behavior relative to the number of driving behaviors for each type, and may then be displayed as a driving evaluation index. By way of example, if the abrupt brake pedaling takes place 20 times against the brake pedaling that takes place 100 times, the rate of the particular maneuver (the rate of the brake abruptly pedaled) is 20%. Accordingly, by rendering it to be an index directly descriptive of the frequency of risk of the driving maneuver of the vehicle driver, it is possible to determine which the individual driving technique is right or wrong. Also, with respect to the degree of risk in driving, by considering the frequency of occurrence of the particular behavior (the mean time between the incidents or the mean distance between the incidents) in combination with the right or wrong of the driving technique from the frequency of maneuver of the particular behavior (the particular maneuver rate), it is possible to perform a reasonable driving evaluation on the particular behavior and a further effective driving assistance can be carried out.

In a still further preferred embodiment of the present invention, the timing of occurrences of an accident or the distance of occurrences of an accident may be predicated from the mean time between the incidents or the mean distance between the incidents and one day's driving hour or driving distance and is then displayed. Accordingly, the awareness of the risk against an accident is formed from the predicated timing or the predicated distance and the vehicle driver becomes aware of taking care of a safe driving and, hence, a further effective driving assistance can be carried out.

In a still further preferred embodiment of the present invention, a risk calculation for an automobile insurance may be carried out, based on the driving evaluation indexes including the acquired frequency of occurrence of the particular behaviors, the mean time between the incidents or the mean distance between the incidents of the particular behavior. In such case, the effective risk calculation can be accomplished on the basis of the reasonable driving evaluation made to the individual vehicle driver.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic structural diagram showing a driving assistance device according to a preferred embodiment of the present invention;
Fig. 2 is a diagram showing one example of a driving behavior record in the driving assistance device shown in Fig. 1;
Fig. 3 is a characteristic chart showing one example of transit of the mean time between incidents (MTBI) of a particular behavior;
Fig. 4 is a characteristic chart showing one example of a distribution of body numbers of the mean time between the incidents (MTBI) of the particular behavior;
Fig 5 is a characteristic chart showing one example of an acceleration waveform representative of a driving for a margin for securing an eco improvement; and
Fig. 6 is a characteristic chart showing one example of the margin for the eco improvement according to a MTBI-eco.

### DESCRIPTION OF PREFERRED EMBODIMENTS

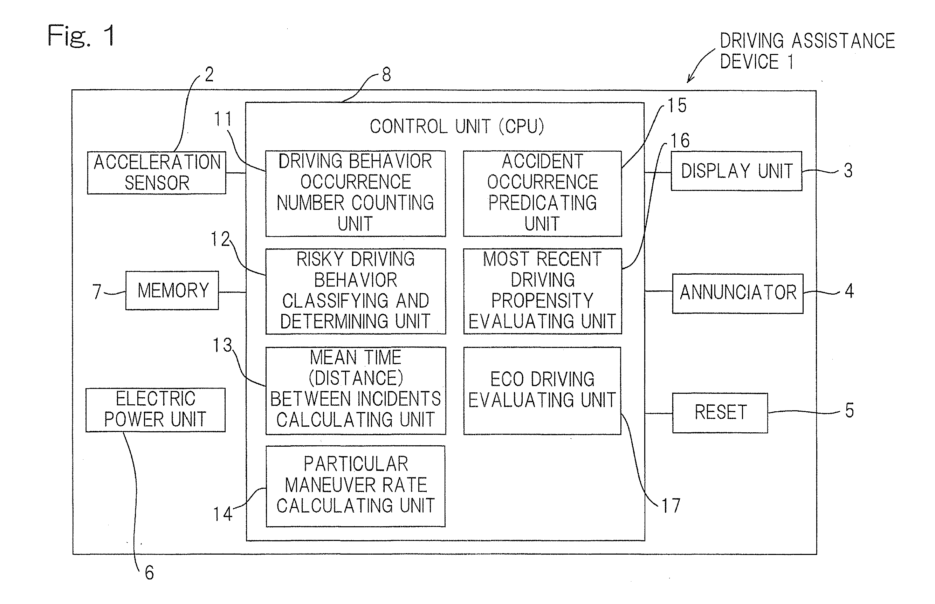

Hereinafter, the present invention will be described in detail with reference to the accompanying drawings. Fig. 1 illustrates a schematic structural diagram showing a driving assistance device designed in accordance with a preferred embodiment of the present invention. The driving assistance device 1 includes an acceleration sensor 2 for detecting the acceleration of an automotive vehicle for the purpose of securing driving behavior of a particular automobile driver, a display unit 3, an annunciator 4, a reset button 5, an electric power unit 6 for supplying an electric power to the driving assistance device 1, a memory 7 and a control unit (CPU, central processing unit) and is mounted on the automotive vehicle so that the particular automobile driver can be evaluated on the basis of his driving behaviors to assist him or her to drive the automotive vehicle he or she drives. The driving behaviors includes at least a brake pedaling behavior, an accelerator pedaling behavior and a handle steering behavior, and, of those behaviors, the particular driving behaviors such as, for example, an abrupt driving behavior is referred to as a risky driving behavior.

The acceleration sensor 2 is used to secure data (G-indication) on accelerations in three axis directions, i.e., a forward or rearward direction parallel to the longitudinal axis of the automotive vehicle, a direction parallel to the lateral axis of the automotive vehicle and a direction parallel to the vertical axis of the automotive vehicle, in order to secure the driving behaviors of the automotive vehicle, so that the particular three driving behaviors such as, for example, the abrupt accelerator pedaling behavior, the abrupt brake pedaling behavior and the abrupt handle steering behavior, those three abrupt driving behavior being generally known as 3 abrupt driving behaviors, can be detected. Also, the length of time the automotive vehicle has travelled, that is, the vehicle traveling time is counted from the length of time detected by the accelerator sensor 2, during which the automotive vehicle has been vibrated.

The driving assistance device 1 referred to above has the electric power unit 6 such as, for example, a direct current power source (battery) mounted on or otherwise built in such driving assistance device 1 and, accordingly, not only is no electric cable wiring required to supply the electric power from the automotive vehicle to the driving assistance device 1, but the driving assistance device 1 can be easily installed at any desired or required location in the automotive vehicle.

The display unit 3 is employed in the form of, for example, a liquid crystal display (LCD) unit or a light emitting diode (LED) array and is used to display the frequency of occurrence of incidents that have occurred during the driving, the mean time between the incidents (the mean Hyari time: MTBI), the rate of a particular maneuver that has taken place during the driving, the time of occurrence of a predicated accident expected to occur, the most recent evaluation on the driving propensity and the evaluation on a driver's eco-friendly driving, all of which are peculiar to one particular automobile driver as will be described later. The memory 7 referred to above is utilized to store those data.

The control unit (CPU) 8 referred to above controls the driving assistance device 1 in its entirety and, for this purpose, includes a driving behavior occurrence number counting unit 11 for counting the frequency of occurrence of incidents, a risky driving behavior classifying and determining unit 12 for determining the type of the risky driving behavior, a mean time (distance) between incidents calculating unit 13 for calculating the mean time (distance) between incidents, a particular maneuver rate calculating unit 14 for calculating the rate of the particular manipulation, an accident occurrence predicating unit 15 for predicating the time of an accident, a most recent driving propensity evaluating unit 16 for providing the most recent evaluation on the driving propensity, and an eco driving evaluating unit 17 for providing an evaluation on the driver's eco-friendly driving.

The driving behavior occurrence number counting unit 11 counts the frequency of occurrence of incidents, that have taken place for each type of the driving behaviors, in units of a predetermined travel, for example, in units of one day's travel which is measured by the accelerator sensor 2 referred to above. The counted frequency of occurrence of the incidents is displaced on the display unit 3 each time one incident occurs during the driving, as a driving evaluation index, according to which index aimed at the zero number is considered desirable or recommended as a target. Also, for each particular driving behavior, each incident is announced by the annunciator 4 in the form of, for example, a voice message and/or an alarm so that the driver can recognize the occurrence of such incident. With the annunciation so made by the annunciator 4, the driver can be acknowledged of what itch of maneuver in driving his or her automobile is undesirable.

Accordingly, the driver can ascertain the frequency of occurrence of one of the particular driving behaviors, for example, the abrupt driving behavior during his or her driving within one day's driving time, thus allowing the driver, who is so cautioned, to be encouraged to realize a safe driving so that a readily understandable and highly versatile daily lodestar retuning home with zero occurrence of the abrupt driving behaviors by avoiding the abrupt driving behavior can be attained by avoiding the abrupt driving behavior. Also, because of the target setting of the frequency of occurrence of the abrupt driving behaviors and the immediate display, the driver himself or herself can ascertain the current frequency of occurrence of the abrupt driving behaviors with no supervisor intervening and, therefore, not only can the necessity of guidance and advice from the supervisor be eliminated with the burden on the supervisor relieved consequently, but the driver can also be effectively assisted to commit the safety driving.

The frequency of occurrence of the abrupt driving behaviors is stored at the end of a day in the memory 7 for one day's total driving time and is reset to zero when the reset button 5 is pressed. When the reset is effected for one day's total driving time in the manner described above, it is possible to encourage the drive to improve his manner of driving so that the frequency of occurrence of the abrupt driving behaviors can be set to zero in readiness for the next day's driving time.

The risky driving behavior classifying and determining unit 12 classifies the risky driving behaviors according to the type including at least an abrupt behavior, a suspected careless behavior, a suspected hasty behavior and a dozing behavior and then determine which one of those risky driving behaviors is currently taken place. Each of those risky driving behaviors is displayed on the display unit 3 and is informed by the annunciator 4 in the form of a voiced message and/or alarm. The abrupt behavior referred to above includes an abrupt accelerator pedaling, an abrupt brake pedaling and an abrupt handle steering that are known as 3 abrupt driving behaviors.

The suspected careless behavior during the automobile driving is a suspected behavior which at least one of abrupt accelerator pedaling, abrupt brake pedaling and an abrupt handle steering is effected after little change in acceleration of the automotive vehicles have take place for a certain length of time in the absence of, for example, acceleration or deceleration of the automotive vehicle or the handle steering. The suspected hasty behavior during the driving is a suspected behavior that the abrupt accelerator pedaling and the abrupt brake pedaling takes place successively a number of times.

The dozing behavior is a behavior that because of a meandering motion of the automotive vehicle due to the driver's doze, the acceleration in excess of a predetermined range is detected on the basis of acceleration data in leftward and rightward directions detected by the acceleration sensor 2.

In the event of the determination of the suspected careless behavior, the suspected hasty behavior and the dozing behavior, a voiced message is issued to the driver to ask for a vocalization upon occurrence of each of those behaviors and, in the absence of the vocalization, the voiced message referred to above and/or an alarm are announced. For example, the annunciator 4 issues a voiced message, "Speak something loudly", to the driver to make him or her conscious of a risky driving he or she is now doing, so that the driver can be immediately alerted. If a response is made from the vehicle driver to the voiced message calling his or her attention that he or she is in danger, a voice recognizer (not shown) recognizes the driver's response to determine that he or she is not dozing, not careless and not hasty. On the other hand, if no response is made from the vehicle driver to the voiced message made to call his or her attention, the voiced message and/or the alarm are repeated.

With respect to the risky driving behaviors, other than the abrupt behavior including the abrupt accelerator pedaling, the abrupt brake pedaling and the abrupt handle steering, carelessness and hastiness, which are major causes of automobile accidents, are classified as risky driving behaviors and, by displaying and/or announcing the occurrence of the dozing behavior, the careless behavior and/or the hasty behavior, all of which will lead to an automobile accident, and, also, by effectuating an awaking function by means of a spoken request, the driving assistance can be further effectively carried out.

The mean time between incidents calculating unit 13 calculates, for each type of the driving behaviors, the mean time between incidents (the mean Hyari time: MTBI) of particular driving behaviors on the basis of the frequency of occurrence of the particular driving behavior, which is a proportion of the number of occurrence of each type of the driving behaviors relative to the driving time. The risky behavior referred to above is generally called "Hyari and Hatto" in Japanese and may be referred to as mean Hyari time. The frequency of occurrence of the particular driving behaviors is measured by the Driving behavior occurrence number counting unit 11 whereas the driving time is measured by the acceleration sensor 2. The mean time between the incidents of the particular driving behaviors (MTBI) is based on an idea similar to the means time between failures (MTBF), which is generally used as one of the quality control terminology and represents an average value of time intervals, during which the particular driving behaviors occur, and, also, a driving evaluation index descriptive of the degree of safe driving. In this case, since the driving behaviors, which requires the particular behaviors and the driving time, can be captured only with the acceleration sensor 2, no extra sensor is required and a low cost can therefore be realized.

By way of example, in the case where the type of the driving behavior is a brake pedaling and the particular driving behavior is an abrupt behavior (the abrupt brake pedaling), and if the abrupt brake pedaling takes place 10 times during 100 hours of the driving time, the mean Hyari time (MTBI) is expressed by 100/10 = 10 (hours). This indicates that the abrupt behavior occurs once in ten hours (for each 10 hours) on an average. In general, the longer this time, the degree of risk in driving becomes low. By calculating the MTBI for a long driving time such as, for example, a cumulative driving hour of 100 to 1000 hours, the long term MTBI (the long term mean value) can be obtained as an index having a consistency.

10 hours of the mean Hyari time (MTBI) of this risky behavior is regarded as a continuous time, during which a safe driving can be expected, and is then used as an index representative to the degree of risk in driving. Accordingly, unlike the conventional driving evaluation table and the 100 point rating evaluation, since the safe driving is continued in view of the MTBI = 10 hours (the abrupt behavior taking place once every 10 hours), it can be extended to 100 hours (the abrupt behavior taking place once every 100 hours) and then 1,000 hours (the abrupt behavior taking place once every 1,000 hours to the future as an index having consistency and, therefore, even a skilled vehicle driver is encouraged and motivated to commit a safe driving with the aim of extending the continued time without being satisfied with the 100 point rating. Also, since it is clear and readily understandable as the index indicative of the continued time during which the safe driving has been accomplished, it can be used as a versatile index descriptive of the safe driving. Moreover, since the mean time of the incidents (MTBI) is displayed on the display unit 3, it is possible to have the vehicle driver recognize with no supervisor intervening and, therefore, the burden of the supervisor can be relieved.

By way of example, a gentle (light) start, a constant speed driving (comfortable driving) and a constant pressure (thorough braking), which are known as driving behaviors for an eco driving (economical driving) are common to the safe driving in that the vehicle driving takes place with the acceleration during the start, the halt and the acceleration and deceleration kept down and, by so executing them, the MTBI can be extended.

It is to be noted that in place of the mean time between the incidents (the means Hyari time: MTBI) referred to above, a similar result can be obtained even if, based on the frequency of occurrence of the particular behavior, which is a proportion of the number of occurrence of the particular behavior relative to the driving distance, the mean distance between incidents of the particular behavior (the means Hyari distance; MDBI) for each type is acquired. This driving distance can be obtained from vehicle information or conversion from the driving time.

The particular maneuver rate calculating unit 14 calculates, for each of the type of the driving behaviors, the rate of the particular maneuver on the basis of the frequency of maneuver of the particular behavior, which is a proportion of the number of occurrences of the particular behaviors relative to the number of the driving behaviors for each type. The number of occurrence of the particular behaviors is measured by the number of occurrence of the behaviors unit 11 and the frequency of the driving behaviors is measured by the acceleration sensor 2. For example, if the abrupt braking occurs 10 times during 100 times of the brake pedaling, the rate of the particular maneuver that takers place is expressed by 100/10 = 10 (%). When this is used as an index representative directly of the frequency of risks in the driver's driving, it become possible to determine whether the individual driving technique is acceptable or unacceptable. The higher the value of the particular maneuver rate, the more the driving is outrageous, but the lower the value is, the more the driving technique is evaluated fair and gently. The driving evaluation index of the rate of particular maneuver for each type of the driving behaviors is displayed on the display unit 3.

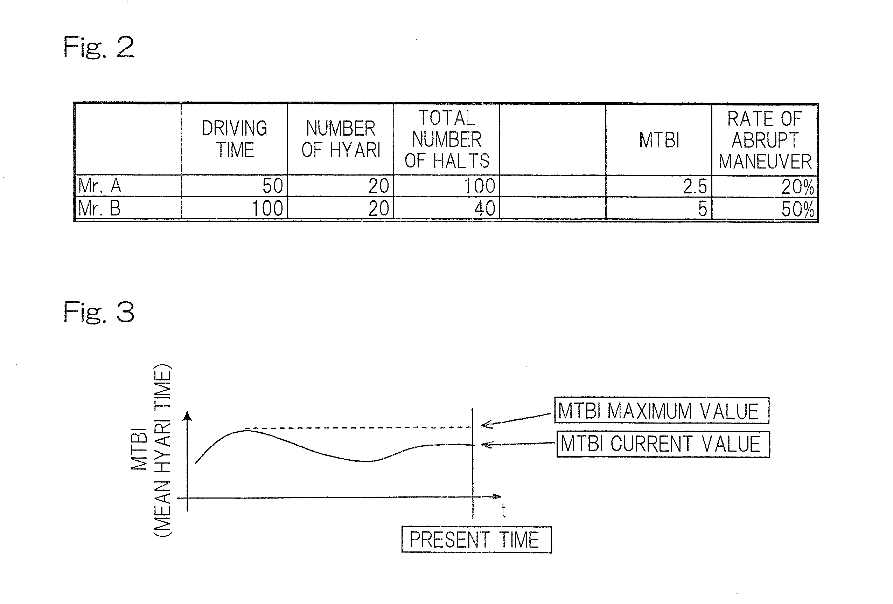

Fig. 2 illustrates one example of a driving behavior record in the driving assistance device 1. For example, in the case where the type of the driving behavior is a brake pedaling and the particular behavior is an abrupt behavior (brake pedaling) of the risky driving behavior, a driver, called Mr. A, exhibits the mean Hyari time (MTBI) which reads 2.5 because the abrupt braking (the number of Hyari) during the driving time of 50 hours takes place 20 times, whereas a driver, called Mr. B, exhibits the mean Hyari time (MTBI) which reads 5 because the abrupt braking (the number of Hyari) during the driving time of 100 hours takes place 20 times. Since Mr. A performs the abrupt brake pedaling one time during a period of 2.5 hours and Mr. B performs the abrupt brake pedaling one time during a period of 5 hours, Mr. Exhibits the mean Hyari time (MTBI) out of the degree of driving risk which is smaller than that by Mr. B.

On the other hand, Mr. A undergoes the abrupt brake pedaling (the number of Hyari) 20 times out of 100 braking (the total number of halts) and, therefore, his rate of particular maneuver (the rate of abrupt maneuver) is 20%, whereas Mr. B undergoes the abrupt brake pedaling (the number of Hyari) 20 times during a period of 40 hours of the brake pedaling (the total number of halts) and, therefore, his rate of particular maneuver (the rate of abrupt maneuver) is 50%. Accordingly, Mr. B exhibits a higher rate of particular maneuver (the rate of abrupt maneuver) of the driving riskiness than Mr. A's.

In the event that Mr. A drives on, for example, a open road and Mr. B drives on, for example, an express way, the number of driving maneuvers experienced on the local way is larger than that on the express way and, therefore, the frequency of occurrence of the particular behaviors on the local way is larger than that on the free way, resulting in the mean Hyari time (MTBI) of the particular behaviors that is smaller on the local load than on the express way. However, where the rate of particular maneuvers is low even though the mean Hyari time (MTBI) is smaller on the local load as described above, the driving behavior is not outrageous and, hence, Mr. A's degree of risk in driving may be said to be low. Conversely, where the rate of particular maneuvers is high even though the mean Hyari time (MTBI) is great, Mr. B's degree of risk in driving may be said to be high. The description similar to that equally applies to the case with the crowded road in an urban area and with the quiet road in a rural area.

As discussed above, regarding the degree of risk in driving, by classifying the degree of inevitable risk, which is the frequency of occurrence of the particular behaviors (the mean Hyari time) that occurs inevitably, and the degree of so-called human induced risk, which the frequency of occurrence of particular behaviors (the rate of particular maneuvers) that occurs depending on right and wrong of the driving technique, and then by coupling the right and wrong of the driving technique (the outrage in driving) to the mean Hyari time (MTBI), a reasonable evaluation of the degree of risk in driving becomes possible and, hence, the driving assistance can be effectively carried out.

It is to be noted that, in the case of the type of the driving behavior being an accelerator pedaling, the mean time between incidents (the mean Hyari time (MTBI)) and the rate of the particular maneuver are calculated with respect to the abrupt behavior of the particular behavior (the abrupt accelerator pedaling), but in the case of the type of the driving behavior being a handle steering, the mean time between incidents (the mean Hyari time (MTBI)) and the rate of the particular maneuver are calculated with respect to the abrupt behavior of the particular behavior (the abrupt handle steering).

The accident occurrence predicating unit 15 referred to previously predicates the timing of occurrence of an accident or the distance of occurrence of an accident on the basis of the mean time between the incidents (MTBI) or the mean distance between the incidents (MDBI) and one day's driving hour or driving distance. According to the "Heinrich's Law" relating to the safety activities, 300 cases of Hyari and/or Hatto, 29 cases of fender-bender accidents and one case of a major accident are reckoned in a ratio of 220:29:1 to determine. The utilization of this results in a predication of, for example, one case of a major accident, 29 cases of fender-bender accidents and 300 cases of Hyari or Hatto incidents when the vehicle driver having the mean Hyari time (MTBI) drives for 330 hours. In other words, according to the predication of the timing of occurrence of accidents, the fender-bender accidents occur within 29 hours and the major accident within 330 hours. For example, the vehicle driver driving 2 hours for each day on an average, it is predicated that the fender-bender accident occurs within 15 days, the major accident within 165 days. The predicated timing of occurrence of accidents is displayed on the display unit 3. The vehicle driver looking at the predicated timing will have a sense of crisis against the possible occurrence of an accident and will therefore be encouraged and motivated to commit a safe driving and is thus assisted effectively to conduct the safe driving.

The most recent driving propensity evaluating unit 16 evaluates a short time driving propensity (a short time trend) by comparing a short term driving evaluation index, which represents the mean time between incidents (MTBI) or the mean distance between incidents (MDBI) for the predetermined driving unit with the mean time between incidents (MTBI) or the mean distance between incidents (MDBI) for a longer driving unit than the predetermined driving unit. Evaluated contents are displayed on the display unit 3.

By way of example, with respect to the most recent MTBI, it is determined that if the long term MTBI is long when comparison is made between 100 hours in the long term MTBI and 10 hours in the short term MTBI, a trend to improve is currently taking place, but if the short term MTBI is short, an aggravating trend is currently taking place. In such case, by means of a light emitting diode employed in the display unit 3, a display of improvement is indicated by a blue color or an upwardly oriented arrow marking, but the aggravating trend is indicated by a red color or a downwardly oriented arrow marking. Also, using a bar chart displayed by a liquid crystal display, an upper half of such bar chart and a lower half of such bar chart are used to indicate the improving trend and the aggravating trend. Accordingly, based on the long term driving trend indicating the driving propensity peculiar to the vehicle driver, it is possible to grasp whether the driver's current short term driving propensity is desirable or whether the driver's current short term driving propensity is undesirable, and, therefore, what has been grasped can be used for a motivation to the improvement so that the driving assistance can be effectively carried out.

When the MTBI attains a predetermined step target value that has been preregistered, a step award is given. By way of example, when the MTBI is, for example, 10 hours, 100 hours and 1,000 hours, the annunciator 4 sounds fanfare and, at the same time, she display unit 3 may display a visual marking of issue of a certificate of commendation or a certificate of achievement. Also, the vehicle driver can obliged to show that his or her MTBI is more than 10 hours and/or to present the certificate of achievement. Yet, in the case where the MTBI is shorter than, for example, one hour, a safety training program may be requested and/or a request may be made to submit a memory card not shown in which the driving behavior is recorded.

Fig. 3 illustrates a characteristic chart showing one example of a transit of the mean time between the incidents of the particular behavior (MTBI). Since the MTBI is shown in the form of a running average for a certain period, it tends to become good at a time and worse at another time. For this reason, as shown in Fig. 3, if the maximum value of the past MTBI is recorded and the past maximum value of the MTBI and the current maximum value of the MTBI are then compared, comparison with the current MTBI value can be facilitated and making aware of the safe driving can be enhanced.

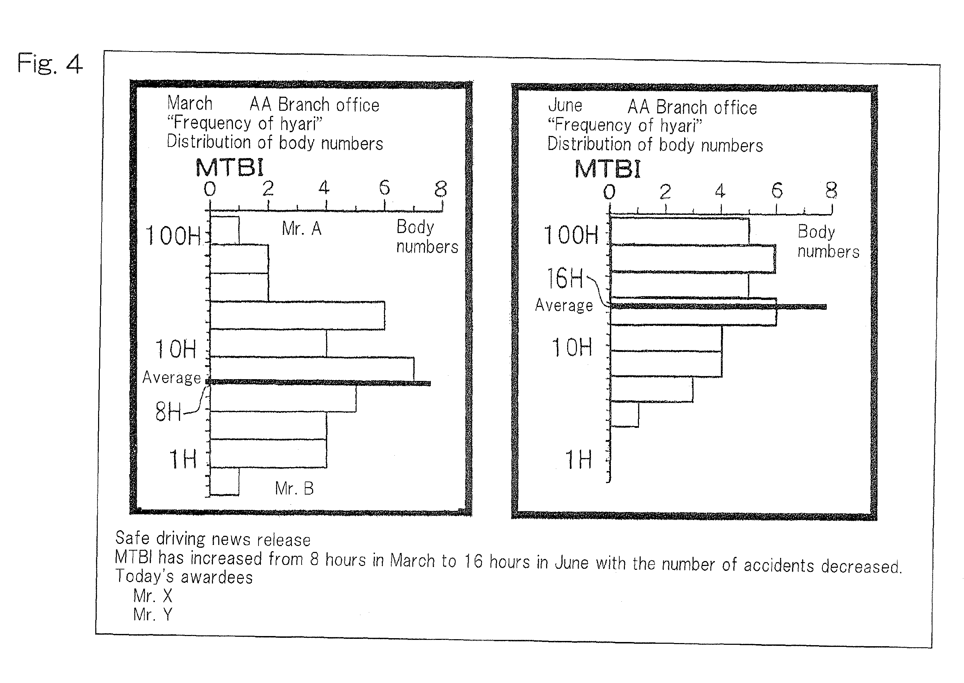

Fig. 4 illustrates a diagram showing one example of the distribution of the body numbers having respective mean time between the incidents of the particular behavior (MTBI) at a certain business establishment. This is counted for each of the business establishes and data processing is made at a control center so that the average value of the monthly MTBI for all employees at one business establishment can be calculated. Comparing March and June with each other, it will readily be seen that the average value of the MTBI increases from 8 hours to 16 hours and a predetermined evaluation content such as, for example, a "Save Driving News" shown in the right column in Fig. 4 is sent from the control center to each business establishment in the form of an E-mail or a facsimiled letter so that in each of the business establishes efforts can be made to promote the safe driving. On the other hand, thanks to the reduction in burden on the supervisor, the supervisor can back up a making of the step target value and presentation of the award of merit for the purpose of distributing information on the driving risk, currently imposed on the vehicle, driver, and increasing the awareness towards the safe driving.

The MTBI is representative of the expected time of the safe driving (safety expected time) and is utilized in improvement campaign for the prolongation thereof. When the average value of the MTBIs in the whole company of the business establishments is secured, the corporate campaign for the improvement of the MTBI can be made. Thanks to the use of the readily understandable and highly versatile index of consistency, a reasonable driving management can be enabled and the vehicle driver can be assisted on a company wide basis in enhancing the awareness of and the motivation towards the safe driving.

The eco driving evaluating unit 17 evaluates whether or not the economical (eco) driving is conducted, by classifying the driving behaviors into a plurality of behavior levels including a non-eco behavior level which are at least a risky behavior level and a quasi-risky behavior level of a lower degree of risk than that of the risky behavior level on the basis of the acceleration waveform descriptive of the driving behaviors. This evaluation is displayed on the display unit 3.

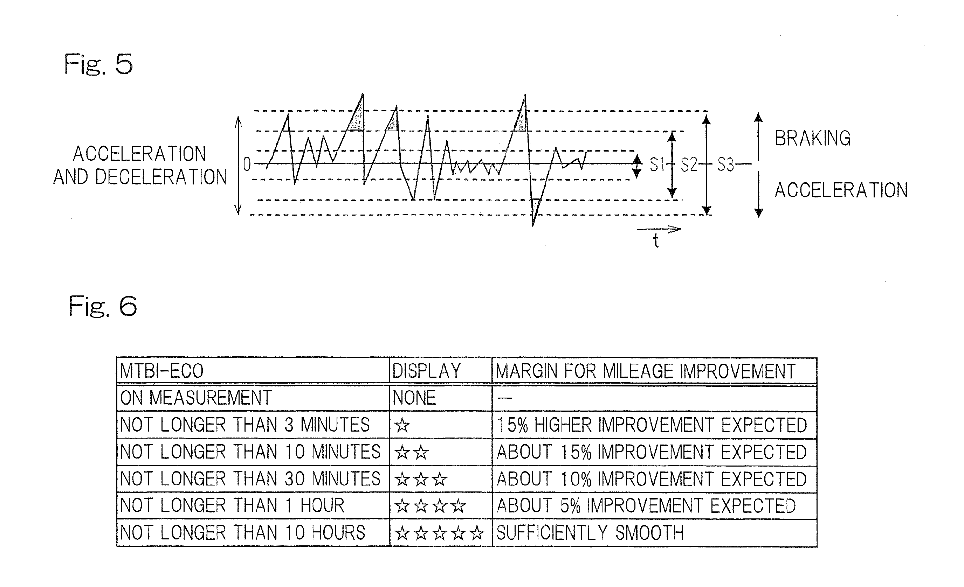

Fig. 5 illustrates on example of the acceleration waveform descriptive of the driving behavior for the purpose of securing an allowance for the eco improvement, in which the axis of ordinate represent the acceleration and the axis of abscissas represents time. By way of example, three threshold values S1, S2 and S3 are set up, in which the threshold value S3 represents a risky behavior level, S2 represents a non-eco behavior level, which is a quasi-risky behavior level having a lower degree of risk than that of the risky behavior level, and S1 represents a non-risky behavior level. In the acceleration waveform, the region not higher than the threshold value S1 is determined as a steady variation, the region between the threshold value S1 to the threshold value S2 is determined as a usual behavior-based maneuver, the region between the threshold value S2 to the threshold value S3 is determined as a non-eco behavior-based maneuver, and the region exceeding the threshold value S3 is determined as a risky behavior-based maneuver. And, by rendering the behavior more than the lower behavior level than the risky behavior level, which provides a basis for the MTBI shown in Fig. 2, to be a non-eco behavior, a driving evaluation index of "MTBI-eco" as a eco version of the MTBI is displayed on the display unit 3 so that there may be a margin for further improvement on the mileage with respect to what has a time shorter than that.

As shown in Fig. 6, asterisks are displayed according to the time of "MTBI-eco" based on the acceleration waveform shown in Fig. 5, to thereby indicate the margin for improvement on eco. The "MTBI-eco" time is preferred to be long as is the case with the MTBI and the spacing between the display of at least one asterisk, which represents the shortest time (for example, the time shorter than 3 minutes) of the mean time between the incidents of the non-eco behavior (the average value of time spans during which the non-eco behaviors occurs) to the display of the maximum five asterisks, which represents the longest time (for example, the time not longer than 10 hours) contains respective displays of two asterisks, three asterisks and four asterisks. By way of example, in the case of the MTBI being shorter than 3 minutes (the display of one asterisk), a margin for 15% or higher improvement on mileage can be expected, but in the case of the MTBI being shorter than 1 hour (the display of four asterisks) a margin for about 5% improvement on mileage can be expected. In the case of the MTBI being shorter than 10 hours (the display of five asterisks), the driving is sufficiently smoothly and, therefore, no margin for improvement on mileage is available. As described above, by displaying the margin for improvement on mileage in terms of the driving evaluation index utilizing the mean time between the incidents (MTBI), the vehicle driver can be assisted as to the eco driving.

Also, the previously described gentle (light) start is effective to achieve the economical (eco) by way of the improvement in mileage and, during the start and acceleration, the number of continuous executions of the gentle start can be added to the driving evaluation index as an eco point and can be displayed on the display unit 3 as a record of the result of efforts to improve on mileage.

As hereinabove described, according to the present invention, since the number of occurrences of the particular behavior is displayed on the display unit 3 for each occurrence of the particular behavior as the driving evaluation index, the vehicle driver can tackle an aim of realizing the safe driving under the convincing awareness according to the readily understandable and highly versatile daily lodestar. Also, since due to the target setup of the number of occurrences of the behavior and the instant display, the vehicle driver can ascertain the number of current occurrences of the behavior by himself or herself with no supervisor intervening, neither evaluation by nor guidance from the supervisor is necessary any longer with the burden on the supervisor relieved consequently and, therefore, the safe driving by the vehicle driver can be effectively assisted. Moreover, since with the acceleration sensor 2 data on the particular behavior out of the driving behaviors and the driving hour (distance) can be obtained, a low cost is accomplished; since the electric power unit 6 is included within the driving assistance device, no labor in wiring electric power cables is required to facilitate the disposition; and since a place for installation of the driving assistance device within the vehicle interior is not specifically limited, a handy driving assistance device can be realized.

Yet, since the mean time between the incidents of the particular behavior (MTBI) is regarded as a continuous time during which the safe driving can be expected and is then displayed as the driving evaluation index, the vehicle driver can be assisted by the use of the similarly readily understandable, highly versatile and consistent index. In addition, by indicating the margin for improvement on mileage by means of the driving evaluation index of "MTBI-eco" utilizing the mean Hyari time (MTBI), the margin for improvement on mileage can be easily grasped and, therefore, the economical (eco) driving by the vehicle driver can be assisted.

It is to be noted that although in the embodiment of the present invention hereinabove fully described, the rate of the particular maneuver has been calculated, the timing at which an accident occur has been predicated, the most recent driving propensity has been evaluated and the economical (eco) driving has been evaluated, one or two or more of them can be dispensed with if so desired.

It is also to be noted that in the embodiment of the present invention hereinabove fully described, the acceleration sensor 2 has been shown and described as detecting the vehicle driving hour or distance, the use may be made of a velocity sensor to perform an extra detection. In addition, the vehicle driving distance may be additionally detected through distance information according to the standards for OBD (On Bard Diagnosis) and a GPS device.

It is furthermore to be noted that based on the driving evaluation indexes such as, for example, the frequency of occurrence of the previously described particular behavior, the mean time between the incidents or the mean distance between the incidents (MTBI or MDBI), the rate of the particular maneuver and the most recent driving propensity and the predication of the timing of occurrence of the accident or the distance of occurrence of the accident, a risk calculation for an automobile insurance may be carried out. In such case, an effective risk calculation based on the reasonable driving evaluation can be carried out for individual vehicle drivers.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims hereto, to be construed as included therein.

### [Reference Numerals]

- 1: Driving assistance device
- 2: Acceleration sensor
- 3: Display unit
- 4: Annunciator
- 5: Reset
- 6: Electric power unit
- 7: Memory
- 8: Control unit
- 11: Driving behavior occurrence number counting unit
- 12: Risky driving behavior classifying and determining unit
- 13: Mean time (distance) between incidents calculating unit
- 14: Particular maneuver rate calculating unit
- 15: Accident occurring time predicating unit
- 16: Most recent driving propensity evaluating unit
- 17: Eco-driving evaluating unit

## Claims

1. A driving assistance method for assisting a vehicle driver by securing a driving behavior from an acceleration of an automotive vehicle, which has been detected by an acceleration sensor mounted on the automotive vehicle, and evaluating such driving based on the driving behavior;
in which for each type of driving behaviors, the frequency of occurrence of incidents of a particular behavior for each type is calculated and a driving evaluation index based on the measured frequency of occurrence of the incidents is displayed.

2. The driving assistance method as claimed in claim 1;
in which for each type of the driving behaviors, the frequency of occurrence of the incidents of the particular behavior in predetermined driving units is measured and the measured frequency of occurrence of the incidents is displayed for each particular behavior as the driving evaluation index aimed at a zero number.

3. The driving assistance method as claimed in claim 1;
in which for each occurrence of the particular behavior, annunciation is made to cause the vehicle driver to recognize such occurrence.

4. The driving assistance method as claimed in claim 1;
in which for each type of driving behaviors, a mean time between incidents of the particular behavior is calculated on the basis of the frequency of occurrence of the particular behavior, which is a proportion of the number of occurrence of the each type of the particular behavior relative to a predetermined driving hour, which is a predetermined driving unit, and such mean time between the incidents is displayed as a driving evaluation index.

5. The driving assistance method as claimed in claim 1;
in which for each type of the driving behaviors, a mean distance between incidents of the particular behavior is calculated on the basis of the frequency of occurrence of the particular behavior, which is a proportion of the number of occurrence of the each type of the particular behavior relative to a predetermined driving distance, which is a predetermined driving unit, and such mean distance between the incidents is displayed as a driving evaluation index.

6. The driving assistance method as claimed in claim 1;
in which whether or not an eco driving is conducted is evaluated from an acceleration waveform descriptive of the driving behaviors, by classifying the driving behaviors into a plurality of behavior levels including a non-eco behavior level which are at least a risky behavior level and a quasi-risky behavior level of a lower degree of risk than that of the risky behavior level on the basis of an acceleration waveform descriptive of the driving behaviors and then displaying.

7. The driving assistance method as claimed in claim 6, further evaluating, and then, displaying, the number of continuous executions of a gentle start as a driving evaluation index for an eco driving during the start and acceleration of the vehicle driving.

8. The driving assistance method as claimed in claim 4 or 5;
in which a most recent short term driving evaluation index, which is a mean time between incidents or a mean distance between incidents for the predetermined driving unit, is compared with a most recent long term driving evaluation index, which is a mean time between incidents or a mean distance between incidents for a longer driving unit than the predetermined driving unit to evaluate a most recent short term driving propensity, and is then displayed.

9. The driving assistance method as claimed in claim 4 or 5;
in which the particular behavior is a risky behavior of a high degree of risk and determination is made after the risky behavior has been classified into behaviors including at least an abrupt behavior, a suspected careless behavior, a suspected hasty behavior and a dozing behavior.

10. The driving assistance method as claimed in claim 9;
in which in the event that determination is made of the suspected careless behavior, the suspected hasty behavior and the dozing behavior, a voiced message requesting the vehicle drive to speak is issued at the time of occurrence of each of the behaviors and, if no response is made, annunciation is made with the voiced message and an alarm.

11. The driving assistance method as claimed in claim 4 or 5;
in which for each type of the driving behaviors the rate of a particular maneuver is calculated on the basis of the frequency of maneuvers, which is a proportion of the number of occurrences of the particular behavior relative to the number of driving behaviors for each type, and is then displayed as a driving evaluation index.

12. The driving assistance method as claimed in claim 4 or 5;
in which the timing of occurrences of an accident or the distance of occurrences of an accident is predicated from the mean time between the incidents or the mean distance between the incidents and one day's driving hour or driving distance and is then displayed.

13. The driving assistance method as claimed in claim 11;
in which based on the driving evaluation indexes including the acquired frequency of occurrence of the particular behaviors, the mean time between the incidents or the mean distance between the incidents of the particular behavior, a risk calculation for an automobile insurance is carried out.

14. A drive assistance device comprising an acceleration sensor for detecting the acceleration of an automotive vehicle for securing a driving behavior, a display unit, an electric power unit and a control unit, all mounted on the automotive vehicle for assisting a vehicle driver by evaluating a driving based on the driving behavior;
in which the control unit includes a driving behavior occurrence number counting unit for counting, for each type of driving behaviors, the number of occurrence of driving behaviors of a particular behavior for each type; and
in which a driving evaluation index based on the counted number of occurrence of the driving behaviors is displayed by the display unit.

15. The driving assistance device as claimed in claim 14;
in which the driving behavior occurrence number counting unit counts, for each of the driving behaviors, the number of occurrence of driving behaviors of a particular behavior for each type; and
in which the counted number of occurrence of the driving behaviors is displayed by the display unit for each occurrence of the particular behavior as a driving evaluation index aimed at the zero number of occurrence.

16. The driving assistance device as claimed in claim 14, further comprising an annunciator for announcing the occurrence to the vehicle driver, each time the particular behavior occurs, so as to allow the vehicle driver to recognize such occurrence.

17. The driving assistance device as claimed in claim 14;
in which the control unit includes a mean time between incidents calculating unit for calculating, for each type of driving behaviors, the mean time between incidents of the particular behavior based on the frequency of occurrence, which is a proportion of the behavior occurrence number of the particular behavior for that type relative to a predetermined driving time which is a predetermined driving unit; and
in which the mean time between the incidents of the particular behavior is displayed by the display unit as the driving evaluation index.

18. The driving assistance device as claimed in claim 14;
in which the control unit includes a mean distance between incidents calculating unit for calculating, for each type of driving behaviors, the mean distance between incidents of the particular behavior based on the frequency of occurrence, which is a proportion of the behavior occurrence number of the particular behavior for that type relative to a predetermined driving distance which is a predetermined driving unit; and
in which the mean distance between the incidents of the particular behavior is displayed by the display unit as the driving evaluation index.

19. The driving assistance device as claimed in claim 14;
in which the control unit includes an eco driving evaluating unit for evaluating whether or not an eco driving is conducted is evaluated from an acceleration waveform descriptive of the driving behaviors by classifying the driving behaviors into a plurality of behavior levels including a non-eco behavior level, which are at least a risky behavior and a quasi-risky behavior level of a lower degree of risk than that of the risky behavior level, on the basis of an acceleration waveform descriptive of the driving behaviors; and
in which whether or not it is the eco driving so evaluated is displayed by the display unit.

20. The driving assistance device as claimed in claim 19;
in which the eco driving evaluating unit also evaluates the number of continuous executions of a gentle start as a driving evaluation index for an eco driving during the start and acceleration of the vehicle driving and the number of the continuous executions so evaluated is displayed by the display unit.

21. The driving assistance device as claimed in claim 17 or 18;
further comprising a most recent driving propensity evaluating unit for evaluating a most recent driving propensity by comparing a most recent short term driving evaluation index, which is a mean time between incidents or a mean distance between incidents for the predetermined driving unit, with a most recent long term driving evaluation index, which is a mean time between incidents or a mean distance between incidents for a longer driving unit than the predetermined driving unit to evaluate a most recent short term driving propensity; and
in which the most recent driving propensity is displayed by the display unit.

22. The driving assistance device as claimed in claim 17 or 18;
in which the control unit includes a risky driving behavior classifying and determining unit for determining by classifying the risky behavior into behaviors including at least an abrupt behavior, a suspected careless behavior, a suspected hasty behavior and a dozing behavior.

23. The driving assistance device as claimed in claim 22;
in which in the event that determination is made of the suspected careless behavior, the suspected hasty behavior and the dozing behavior, a voiced message requesting the vehicle drive to speak is issued at the time of occurrence of each of the behaviors and, if no response is made, annunciation is made with the voiced message and an alarm.

24. The driving assistance device as claimed in claim 17 or 18;
in which the control unit also includes a particular maneuver rate calculating unit for calculating the rate of a particular maneuver, which is the frequency of maneuver of the particular behavior, which is a proportion of the number of occurrence of the particular behavior relative to the number of driving behaviors for each type;
in which the rate of the particular maneuver is displayed by the display unit as a driving evaluation index.

25. The driving assistance device as maimed in claim 17 or 18;
in which the control unit includes an accident occurrence predicating unit for predicating the timing of occurrence of an accident or the distance of occurrence of an accident from the mean time between the incidents or the mean distance between the incidents and one day's driving hour or driving distance; and
in which the timing of occurrence of the accident so predicated or the distance of occurrence of the accident so predicated is displayed by the display unit.

26. The driving assistance device as claimed in claim 24;
in which based on the driving evaluation indexes including the acquired frequency of occurrence of the particular behaviors, the mean time between the incidents or the mean distance between the incidents of the particular behavior, a risk calculation for an automobile insurance is carried out.
